# EUROPÄISCHE PATENTSCHRIFT

(11) **EP 0 956 402 B1**
(45) Veröffentlichungstag und Bekanntmachung des Hinweises auf die Patenterteilung: **17.10.2001**
(21) Anmeldenummer: 97954408.7
(22) Anmeldetag: 16.12.1997
(51) Int. Cl.: E04B 1/19

(54) **TRAGWERK MIT VERBINDUNGSKNOTEN UND STREBEN**
SUPPORTING FRAME WITH ASSEMBLAGE NODES AND BRACES
OSSATURE PORTEUSE AVEC NOEUDS D'ASSEMBLAGE ET ENTRETOISES

(30) Priorität: 19.12.1996 DE 19652969
(43) Veröffentlichungstag der Anmeldung: 17.11.1999
(73) Patentinhaber: Leitner, Burkhardt, 70192 Stuttgart (DE)
(72) Erfinder: Leitner, Burkhardt, 70192 Stuttgart (DE)
(74) Vertreter: Gleiss & Grosse
(86) Internationale Anmeldenummer: EP9707065
(87) Internationale Veröffentlichungsnummer: WO9827290

(56) Entgegenhaltungen:
- DE-B- 1 802 638
- DE-C- 2 420 864
- DE-C- 3 151 353
- GB-A- 2 131 847
- GB-A- 2 257 173
- US-A- 3 632 147

## Beschreibung

Die Erfindung betrifft ein Tragwerk mit Verbindungsknoten und Streben, das beispielsweise im Bereich des Messebaus und im Regalbau Verwendung findet.

Es ist bekannt, z.B. aus Dokument GB-A-2 257 173 die Streben, die im Bereich der Verbindungsknoten miteinander verbunden werden, an den Verbindungsknoten festzuschrauben, um die erforderliche Stabilität zu gewährleisten. Es hat sich jedoch gezeigt, daß gerade bei demontierbaren Systemen derartige Verbindungsmethoden relativ aufwendig und damit nur mit relativ hohen Kosten realisierbar sind.

Es ist daher Aufgabe der Erfindung, ein Tragwerk zu schaffen, das diesen Nachteil nicht aufweist.

Zur Lösung dieser Aufgabe wird ein Tragwerk vorgeschlagen, das die in Anspruch 1 genannten Merkmale aufweist. Dadurch, daß die Verbindung zwischen den Verbindungsknoten und dem Endbereich der Streben durch eine Steckverbindung realisiert wird, ist eine einfache und kostengünstige Verbindung möglich. Mindestens eines der ineinander steckbaren Elemente der Steckverbindung weist dabei wenigstens einen Magneten auf. Das zugehörige mit diesem Element zusammenwirkende Gegenstück ist zumindest bereichsweise ferromagnetisch, so daß eine sichere, gegen versehentliches Lösen geschützte Verbindung der ineinander steckbaren Elemente gewährleistet ist.

Bevorzugt wird eine Ausführungsform des Tragwerks, die sich dadurch auszeichnet, daß die Streben zumindest an einem einem Verbindungsknoten zugewandten Endbereich röhrenförmig ausgebildet sind und daß dieser röhrenförmige Endbereich der Aufnahme eines Magneten und/oder eines ferromagnetischen Gegenstücks dient. Der röhrenförmige Endbereich ist geeignet, sehr hohe Verbindungskräfte aufzunehmen, wobei durch die röhrenförmige Ausgestaltung das Gewicht der Strebe relativ niedrig bleibt.

Weitere Ausgestaltungen ergeben sich aus den übrigen Unteransprüchen.

Die Erfindung wird im folgenden anhand der Zeichnung näher erläutert. Es zeigen:
- Figur 1: eine Seitenansicht eines Verbindungsknotens und einer Strebe und
- Figur 2: einen schematisierten Teilschnitt durch den Endbereich einer Strebe.

Das im folgenden beschriebene Tragwerk wird vorzugsweise für häufig zu demontierende und wieder aufzubauende Systeme verwendet, beispielsweise für Messebauten. Selbstverständlich ist auch der Einsatz im Bereich des Regalbaus sehr wohl möglich.

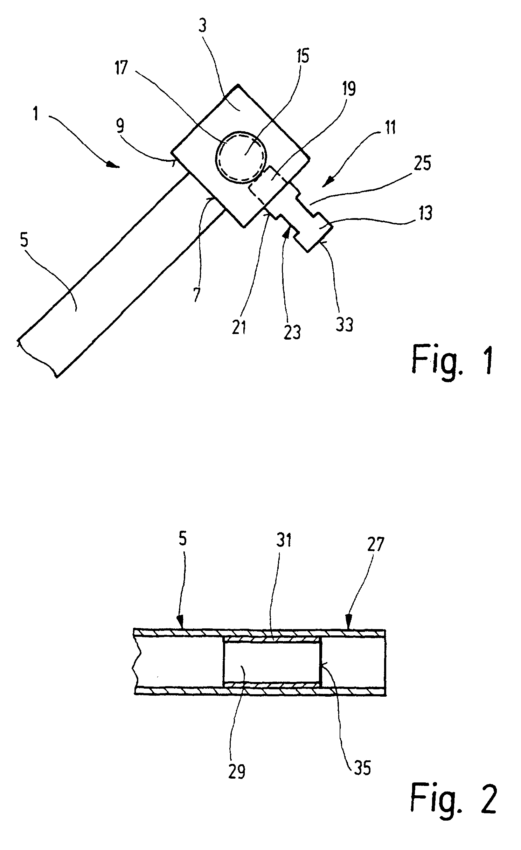

Das Tragwerk besteht aus einer Vielzahl von Verbindungsknoten und Streben. Figur 1 zeigt einen Ausschnitt aus einem Tragwerk 1, nämlich einen Verbindungsknoten 3 und eine daran befestigte Strebe 5. Aus der Darstellung ist ersichtlich, daß das Ende 7 der Strebe 5 unmittelbar an eine Seitenfläche 9 des Verbindungsknotens 3 anschließt. Der Verbindungsknoten 3 ist hier als Würfel mit quadratischen Seitenflächen ausgebildet. Es ist jedoch auch ein beliebiger Polyeder oder auch ein kugelförmiger Verbindungsknoten verwendbar, um ein Tragwerk mit Streben zu realisieren.

Die Strebe 5 ist über eine Steckverbindung 11 mit dem Verbindungsknoten 3 verknüpft. Die Steckverbindung besteht aus zwei ineinander steckbaren Elementen, von denen wenigstens eines einen Magneten aufweist. Das zugehörige Gegenstück ist zumindest bereichsweise ferromagnetisch, das heißt zumindest der Abschnitt des Gegenstücks, der dem Magneten zugeordnet ist, wird von diesem angezogen. Es ist auch möglich, das Gegenstück vollständig aus ferromagnetischem Material herzustellen.

Bei dem hier dargestellten Ausführungsbeispiel weist die Steckverbindung 11 einen Stift 13 auf, der an dem Verbindungsknoten 3 befestigt ist. Dazu ist in mindestens eine vorzugsweise alle Seitenflächen 9 des Verbindungsknotens 3 eine Ausnehmung beziehungsweise Bohrung 15 eingebracht. Die Herstellung des Verbindungsknotens 3 ist am einfachsten, wenn dieser von drei senkrecht zueinander stehenden Bohrungen durchdrungen wird. In die zugehörige Bohrung kann der Stift 13 eingesteckt und auf geeignete Weise, auch mit Hilfe von speziellem Klebstoff, befestigt werden. Bei dem hier dargestellten Ausführungsbeispiel wird davon ausgegangen, daß die den Verbindungsknoten 3 durchdringenden Bohrungen mit einem Innengewinde 17 versehen sind, in die ein hier gestrichelt angedeuteter Gewindeansatz 19 des Stifts 13 eingreift. In die Umfangsfläche 21 des Stifts 13 können zwei gegenüberliegende parallele Planflächen 23 und 25 eingebracht sein, die als Eingriff für einen Schraubenschlüssel dienen, mit dessen Hilfe der Stift 13 in das Innengewinde 17 einschraubbar ist.

Aus Figur 2 ist ersichtlich, daß zumindest ein Endbereich vorzugsweise beide Endbereiche der Strebe 5 röhrenförmig ausgebildet ist. Denkbar ist es auch, die Strebe 5 als durchgehendes Rohr auszugestalten, so daß das Gesamtgewicht des Tragwerks reduziert ist.

Der röhrenförmige Endbereich 27 der Strebe 5 dient der Aufnahme des Stifts 13. Wenn dieser in das Ende der Strebe 5 eingesteckt wird, ergibt sich eine Steckverbindung 11, die -je nach Länge des Stifts 13 und nach Auslegung der Passung zwischen der Innenfläche der Strebe 5 und der Außenfläche des Stifts 13- bereits hohe Kräfte aufnehmen kann. Zur Sicherung der Verbindung zwischen Verbindungsknoten 3 und Strebe 5 werden magnetische Anziehungskräfte aufgebaut. Beispielsweise kann in den Endbereich 27 ein Magnet 29 eingebracht werden, der auf geeignete Weise im Inneren der Strebe 5 befestigbar ist. Hier ist rein beispielhaft eine Befestigungshülse 31 vorgesehen. Für die Realisierung der Steckverbindung 11 ist jedoch die Befestigung des Magneten 29 im Endbereich der Strebe 5 nicht entscheidend. Der Magnet kann also auch durch quer zur Längsachse der Strebe 5 verlaufende Stifte oder Schrauben befestigt werden. Optimal ist jedoch die Befestigung des Magneten im Inneren der Strebe, so daß deren Außenfläche unversehrt bleibt und somit einen besonders ansprechenden optischen Eindruck vermittelt.

Der Abstand des Magneten 29 vom Ende 7 der Strebe 5 wird so gewählt, daß die Endfläche 33 (siehe Figur 1) des Stifts 13 an der Stirnseite 35 des Magneten 29 anliegt. Der Stift 13 ist, um die magnetische Sicherung der Steckverbindung 11 zu gewährleisten, zumindest im Bereich seiner Endfläche 33 ferromagnetisch. Vorzugsweise ist er gänzlich aus ferromagnetischem Material hergestellt.

Wird also der Stift 13 in den röhrenförmigen Endbereich 27 der Strebe 5 eingesteckt, so zieht der Magnet 29 den Stift 13 an, so daß der Stift 13 im Inneren der Strebe 5 sicher gehalten wird. Zusätzliche Haltekräfte können, wie gesagt, dadurch gewährleistet werden, daß zwischen der Innenfläche der Strebe 5 und der Außenfläche des Stifts 13 ein Reibschluß gegeben ist.

Da die Orientierung des Stifts 13 bei einer Schraubverbindung mit dem Verbindungsknoten 3 bezüglich der Drehachse des Stifts 13 nicht gewährleistet ist, wird besonders ein zylindrischer Stift vorgezogen, der in eine zylindrische Hülse beziehungsweise in den zylindrischen Endbereich 27 der Strebe 5 eingreift. Diese kann selbstverständlich eine beliebig gestaltete Umfangsfläche aufweisen. Wesentlich ist nur, daß im röhrenförmigen Endbereich 27 eine zylindrische Aufnahme für den Stift 13 gegeben ist. Nach allem wird deutlich, daß auch ein nichtzylindrischer Stift mit einer entsprechenden Aufnahme im Endbereich 27 einer Strebe 5 zusammenwirken kann. In allen Fällen wird die Steckverbindung 11 durch die Realisierung der Magnetkräfte gesichert. Dabei ist festzuhalten, daß der Magnet 29 auch durch ein ferromagnetisches Teil ersetzt werden kann, sofern der Stift 13 zumindest in seinem Endbereich als Magnet ausgebildet ist.

Aus den Erläuterungen zu den Figuren 1 und 2 wird im übrigen klar, daß anstelle eines Stifts 13 auch eine mit dem Verbindungsknoten 3 verbindbare Hülse eingesetzt werden kann, in die eine Strebe 5 oder eine von der Strebe ausgehende stiftförmige Verlängerung eingesteckt wird. Wesentlich ist auch hier, daß die dadurch realisierte Steckverbindung mit Hilfe von magnetischen Kräften stabilisiert und gesichert wird, wobei auch hier der Magnet und das ferromagnetische Gegenstück austauschbar sind.

Je nach Einsatzort des Verbindungsknotens 3 werden ein oder maximal vier Stifte in den würfelförmigen Verbindungsknoten eingeschraubt und mit Streben verbunden. Bei einem polyederförmigen Verbindungsknoten mit mehr als vier Außenflächen können bei entsprechender Auslegung der Durchmesser der Streben auch mehr als sechs Streben an einem Verbindungsknoten befestigt werden. Es ist im übrigen auch möglich, den Verbindungsknoten kugelförmig auszubilden und mit mehreren Löchern zu versehen, in die Stifte einbringbar sind, wie sie anhand von Figur 1 erläutert wurden.

In allen Fällen kann auf sehr einfache Weise ein leicht aufbau- und demontierbares Tragwerk realisiert werden, wobei durch die Steckverbindung zwischen Streben und Verbindungsknoten hohe Kräfte aufgenommen werden können und gleichzeitig durch die magnetischen Kräfte eine sehr hohe Sicherheit gegen ein versehentliches Lösen der Verbindung gegeben ist.

## Patentansprüche

1. Tragwerk mit Verbindungsknoten und Streben, wobei die Verbindung zwischen den Verbindungsknoten (3) und den Endbereichen (27) der Streben (5) eine Steckverbindung (11) umfaßt, **dadurch gekennzeichnet, daß** mindestens eines der ineinander steckbaren Elemente (Strebe (5)) der Steckverbindung (11) wenigstens einen Magneten (29) aufweist, und daß das zugehörige mit dem Element zusammenwirkende Gegenstück (Stift (13)) zumindest bereichsweise ferromagnetisch ist.

2. Tragwerk nach Anspruch 1, **dadurch gekennzeichnet, daß** die Streben (5) zumindest an einem einen Verbindungsknoten (3) zugeordneten Endbreich (27) - vorzugsweise an beiden Endbereichen- röhrenförmig ausgebildet sind und daß dieser röhrenförmige Endbereich (27) der Aufnahme eines Magneten (29) und/oder eines ferromagnetischen Gegenstücks dient.

3. Tragwerk nach Anspruch 1 oder 2, **dadurch gekennzeichnet, daß** der Magnet (29) in den Endbereich (27) einpreßbar und/oder einklebbar ist.

4. Tragwerk nach einem der Ansprüche 1 bis 3, **dadurch gekennzeichnet, daß** die Verbindungsknoten (3) mindestens einen in einen röhrenförmigen Endbereich (27) einer Strebe (5) einsteckbaren Stift (13) und/oder eine einen Teil einer Steckverbindung (11) bildende Hülse aufweisen, in die die Strebe (5) einsteckbar ist.

5. Tragwerk nach einem der vorhergehenden Ansprüche, **dadurch gekennzeichnet, daß** die Verbindungsknoten (3) als Polyeder ausgebildet sind und daß wenigstens einige, vorzugsweise alle Seitenflächen (9) der Verbindungsknoten (3) mit Löchern (15) versehen sind, die der Aufnahme von Stiften (13) dienen.

6. Tragwerk nach Anspruch 4 oder 5, **dadurch gekennzeichnet, daß** die Stifte (13) in die Verbindungsknoten (3) eingeschraubt sind.

## Claims

1. Load-bearing framework having connecting joints and struts, the connection between the connecting joints (3) and the end regions (27) of the struts (5) comprising a plug-action connection (11), **characterized in that** at least one of the elements (strut (5)) of the plug-action connection (11), it being possible for said elements to be plugged one inside the other, has at least one magnet (29), and **in that** the associated counterpart (pin (13)) interacting with the element is ferromagnetic at least in certain regions.

2. Load-bearing framework according to Claim 1, **characterized in that** the struts (5) are of tubular design at least at an end region (27) assigned to a connecting joint (3) - preferably at both end regions - and **in that** said tubular end region (27) serves for accommodating a magnet (29) and/or a ferromagnetic counterpart.

3. Load-bearing framework according to Claim 1 or 2, **characterized in that** the magnet (29) can be pressed into, and/or adhesively bonded in, the end region (27).

4. Load-bearing framework according to one of Claims 1 to 3, **characterized in that** the connecting joints (3) have at least one pin (13), which can be plugged into a tubular end region (27) of a strut (5), and/or a sleeve which forms part of a plug-action connection (11) and into which the strut (5) can be plugged.

5. Load-bearing framework according to one of the preceding claims, **characterized in that** the connection joints (3) are designed as polyhedra, and **in that** at least some, preferably all, of the side surfaces (9) of the connecting joints (3) are provided with holes (15) which serve for accommodating pins (13).

6. Load-bearing framework according to Claim 4 or 5, **characterized in that** the pins (13) are screwed into the connecting joints (3).

## Revendications

1. Ossature porteuse avec noeuds d'assemblage et entretoises, dans laquelle la liaison entre les noeuds d'assemblage (3) et les extrémités (27) des entretoises (5) comprend une liaison à emmanchement (11),
**caractérisée en ce qu'**
au moins un des éléments emmanchables l'un dans l'autre (entretoise (5)) de la liaison à emmanchement (11) comporte un aimant (29) dont la contrepartie correspondante (broche 13) coopérant avec l'élément, est ferromagnétique au moins localement.

2. Ossature selon la revendication 1,
**caractérisée en ce que**
chaque entretoise (5), au moins à une extrémité (27) associée à un noeud d'assemblage (3) et de préférence à ses deux extrémités, présente une forme tubulaire, cette extrémité tubulaire (27) servant de logement à un aimant (29) et/ou à une contrepartie ferromagnétique.

3. Ossature selon la revendication 1 ou 2,
**caractérisée en ce que**
l'aimant (29) est inséré à force et/ou collé dans l'extrémité (27).

4. Ossature selon une des revendications 1 à 3,
**caractérisée en ce que**
les noeuds d'assemblage (3) comportent au moins une broche (13) emmanchable dans une extrémité tubulaire (27) d'une entretoise (5) et/ou une douille formant une partie d'une liaison à emmanchement (11) dans laquelle l'entretoise (5) peut être emmanchée.

5. Ossature selon une des revendications précédentes,
**caractérisée en ce que**
les noeuds d'assemblage (3) ont une forme de polyèdres, et au moins quelques faces, de préférence toutes les faces latérales (9) des noeuds d'assemblage (3) sont percées de trous (15) servant à accueillir les broches (13).

6. Ossature selon la revendication 4 ou 5,
**caractérisée en ce que**
les broches (13) peuvent être vissées dans les noeuds d'assemblage (3).
